# EUROPEAN PATENT SPECIFICATION

(11) **EP 3 593 023 B1**
(45) Date of publication and mention of the grant of the patent: **15.06.2022**
(21) Application number: 18712319.5
(22) Date of filing: 01.03.2018
(51) Int. Cl.: D04C 1/02, D04C 1/06, F16L 11/11, H02G 3/04, F16L 57/06

(54) **ABRASION RESISTANT BRAIDED CONVOLUTE TEXTILE SLEEVE AND METHOD OF CONSTRUCTION THEREOF**
ABRIEBBESTÄNDIGE GEFLOCHTENE GEWICKELTE TEXTILHÜLLE UND VERFAHREN ZUR KONSTRUKTION DAVON
MANCHON TEXTILE SINUEUX TRESSÉ RÉSISTANT À L'ABRASION ET SON PROCÉDÉ DE CONSTRUCTION

(30) Priority: 08.03.2017 US 201762468693 P; 28.02.2018 US 201815908791
(43) Date of publication of application: 15.01.2020
(73) Proprietor: Federal-Mogul Powertrain LLC, Southfield, MI 48034 (US)
(72) Inventor: YAMAGUCHI, Hiroki, Sagamihara, Kanagawa 252-0318 (JP)
(74) Representative: HGF
(86) International application number: PCT/US2018/020390
(87) International publication number: WO 2018/164927

(56) References cited:
- EP-A1- 3 133 328
- WO-A1-95/13495
- US-A- 5 843 542
- US-A1- 2016 122 915

## Description

### BACKGROUND OF THE INVENTION

### 1. Technical Field

This invention relates generally to textile sleeves for protecting elongate members, and more particularly to braided textile sleeves.

### 2. Related Art

Tubular textile sleeves are known for use to provide protection to internally contained elongate members, such as wire harnesses, fluid or gas conveying tubes, or cables, for example. It is further known to braid tubular textile sleeves for protecting elongate members contained therein. Modern vehicle applications for such sleeves are requiring greater protection to the elongate members, such as against increased environmental temperatures and increased resistance to abrasion, and are further requiring enhanced flexibility due to having to be routed over tight meandering paths. These increased demands require the sleeves to pass increasingly stringent test parameters, such as exposure to increased temperatures and exposure to specifically defined abrasion test specifications.

WO95/13495 and EP3133328 disclose tubular textile sleeves that include pleats along their length. US2016/122915 and US5843542 also disclose textile sleeves

A braided sleeve constructed in accordance with this invention is able to meet the increasingly demanding temperature and abrasion resistant test parameters, as well as demonstrate greatly enhanced flexibility, with other benefits likely to become readily recognized by those possessing ordinary skill in the art.

### SUMMARY OF THE INVENTION

A convolute protective textile sleeve according to the requirements of claim 1 is provided. Crests formed in the wall are immediately adjacent one another in nearly (meaning a gap between adjacent convolutes exists, with the gap being no greater than 1/4 the axial width of a single convolute) abutting relation with one another to form a relatively dense wall thickness and low porosity compared to a known braided sleeve wall having a straight cylindrical (non-convolute) wall. The densely compressed convolutes provide the wall with a greatly enhanced abrasion resistance, a greatly enhanced thermal protection capacity, a greatly enhanced stone/debris impingement resistance, and a greatly enhanced noise absorption capacity while remaining compressed in use, due in part to the increased volume of insulative material and volume of air formed by and within the tight accordion-like shape of the wall. The densely compressed convolutes also provide the wall with a greatly enhanced flexibility such that the sleeve can be routed about tight meandering paths, including sharp bends, without kinking. Accordingly, the elongate member being protected within a cavity of the sleeve receives greatly enhanced protection against a multitude of conditions, including abrasion and environmental thermal effects, as well as being protected against potential damage from impact forces, such as from flying debris impacting the outer surface of the sleeve (e.g. stone impingement and the like).

In accordance with an example of the disclosure, a protective textile sleeve is provided having a flexible, tubular wall of braided yarns. At least some of the yarns are provided as plastically deformable and/or heat-settable monofilaments that can be plastically deformed and/or heat-set upon being braided to provide the wall with an accordion-like, convolute shape. The convolute shape is formed by a plurality of alternating crests and valleys, wherein the crests are formed in tight, axially compressed relation with one another, with the valleys intervening between the crests being relatively narrow or short in axially extending length relative to the crests, thereby providing the wall, while in use, with an increased radially extending density over the thickness of the wall relative to if the wall did not include the crests and valleys, which in turn results in greatly increased protection against abrasion, thermal effects, impact forces, as well as suppression of noise transmission and noise generation. Further, with the wall having an accordion-like shape, greatly enhanced flexibility is attained without concern of kinking when routing the sleeve about meandering paths and about sharp bends, corners and the like.

In accordance with another aspect of the disclosure, the wall can be formed entirely of heat-set yarns.

In accordance with another aspect of the disclosure, the wall can be formed entirely of plastically deformed yarns.

In accordance with another aspect of the disclosure, the wall can be formed of heat-set yarns and plastically deformed yarns.

In accordance with another aspect of the disclosure, the wall can be formed entirely of heat-set and/or plastically deformed monofilaments.

In accordance with another aspect of the disclosure, the wall can include heat-set and/or non-heat-set multifilaments.

In accordance with another aspect of the invention, a method of constructing a convolute textile sleeve according to the requirements of claim 9 is provided.

In accordance with another aspect of the invention, the method can include compressing the wall axially along a longitudinal axis to reduce the as braided length of the wall to between about 1/4 - 1/10 its original length, or greater, prior to plastically deforming and/or heat-setting the wall.

In accordance with another aspect of the invention, the method can further include braiding the wall entirely of heat-settable yarns.

In accordance with another aspect of the invention, the method can further include braiding the wall entirely of plastically deformable yarns.

In accordance with another aspect of the invention, the method can further include braiding the wall entirely of heat-settable monofilaments and/or plastically deformable monofilaments.

In accordance with another aspect of the invention, the method can further include braiding the wall including heat-settable and/or non-heat-settable multifilaments.

In accordance with another aspect of the invention, the method can further include heat-setting the wall so that the crests are tightly packed immediately adjacent one another with the intervening valleys having a relatively short axially extending length relative to the length of the individual crests, thereby providing the wall with a significantly increased density relative to the wall as initially braided and prior to being axially compressed.

### BRIEF DESCRIPTION OF THE DRAWINGS

These and other aspects, features and advantages of the disclosure will become readily apparent to those skilled in the art in view of the following detailed description of the presently preferred embodiments and best mode, appended claims, and accompanying drawings, in which:
Figure 1 is a schematic perspective view of a braided protective textile sleeve constructed in accordance with one aspect of the invention shown protecting an elongate member extending therethrough;
Figure 2 is a fragmentary plan view of a wall of the sleeve of Figure 1;
Figure 2A is an enlarged fragmentary cross-sectional view taken generally along line 2A-2A of Figure 1;
Figure 3 is a view similar to Figure 2 showing the wall being bent into a tight U-shaped without kinking;
Figures 4A-4C illustrate sequential steps performed to construct a sleeve in accordance with another aspect of the disclosure; and
Figures 5A-5C illustrate sleeves constructed in accordance with alternate aspects of the disclosure shown prior to being formed having convolute configurations.

### DETAILED DESCRIPTION OF PREFERRED EMBODIMENTS

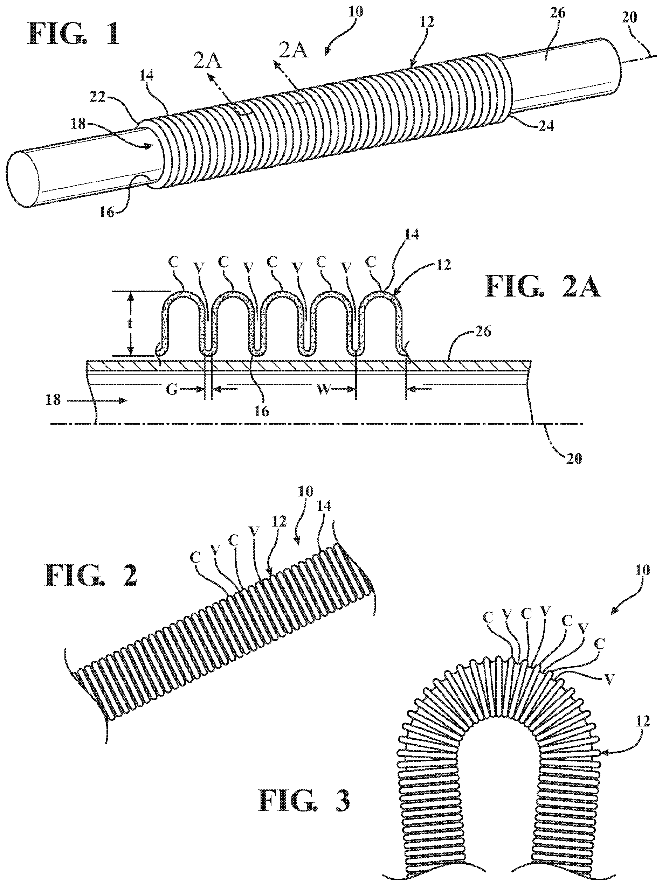

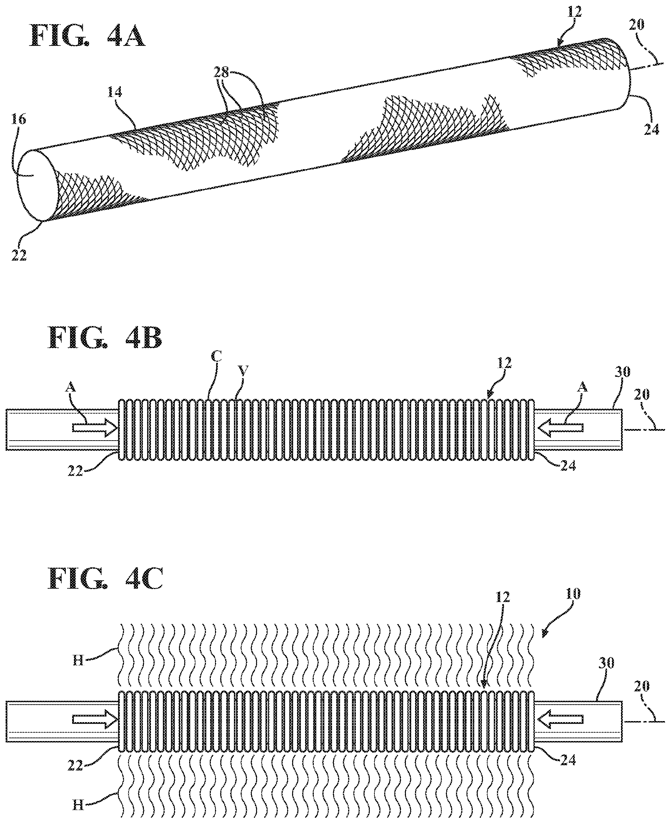

Referring in more detail to the drawings, Figure 1 illustrates a braided tubular textile sleeve 10 constructed in accordance with one aspect of the disclosure. The sleeve 10 has a seamless, flexible, abrasion resistant, single layer, thermally protective tubular wall 12. The wall 12 is braided in seamless fashion, and thus, has a circumferentially continuous, uninterrupted outer surface 14 and an inner surface 16 that defines an inner tubular cavity 18 that extends axially along a central longitudinal axis 20 between opposite ends 22, 24 of the sleeve 10. The cavity 18 is sized for receipt of an elongate member 26 to be protected, such as a wire harness, fluid or gas conveying conduit, cable or the like, there-through. The wall 12 includes yarns provided as plastically deformable and/or heat-settable yarns, and preferably plastically deformable and/or heat-settable monofilaments 28, that are plastically deformed and/or heat-set upon being braided to provide the wall 12 with an accordion-like, convolute shape. The convolute shape is formed by a plurality of alternating crests (C) and valleys (V), wherein the crests C are formed and permanently maintained, either by being plastically deformed and/or heat-set, to maintain a tight, axially compressed relation with one another, such that adjacent crests C are juxtaposed in close relation, and are formed nearly abutting (meaning a slight gap (G, Figure 2A) between adjacent convolutes exists, with the slight gap G being no greater than 1/4 the axial width (W, Figure 2A) of a single convolute, and preferably about 1/8 the axial width or less) another. As such, the valleys V intervening between the crests C are relatively narrow in width, which is to say the individual valleys V are short in axially extending length along the axis 20, corresponding to the axially extending length of gap G, relative to the axially extending length W of the individual crests C. Accordingly, the wall 12 is plastically deformed and/or heat-set to retain a greatly increased density across a wall thickness (t, Figure 2A) relative to when it is first braided (Figure 4A), which in turn results in increased protection against abrasion, thermal effects, and impact forces, as well as providing a greatly enhance noise absorption capacity, discussed further hereafter, without need for additional layers. Further, with the wall 12 having an accordion-like, convolute configuration, greatly enhanced flexibility is attained without concern of kinking when routing the sleeve 10 about meandering paths and about sharp bends, corners and the like (Figure 3).

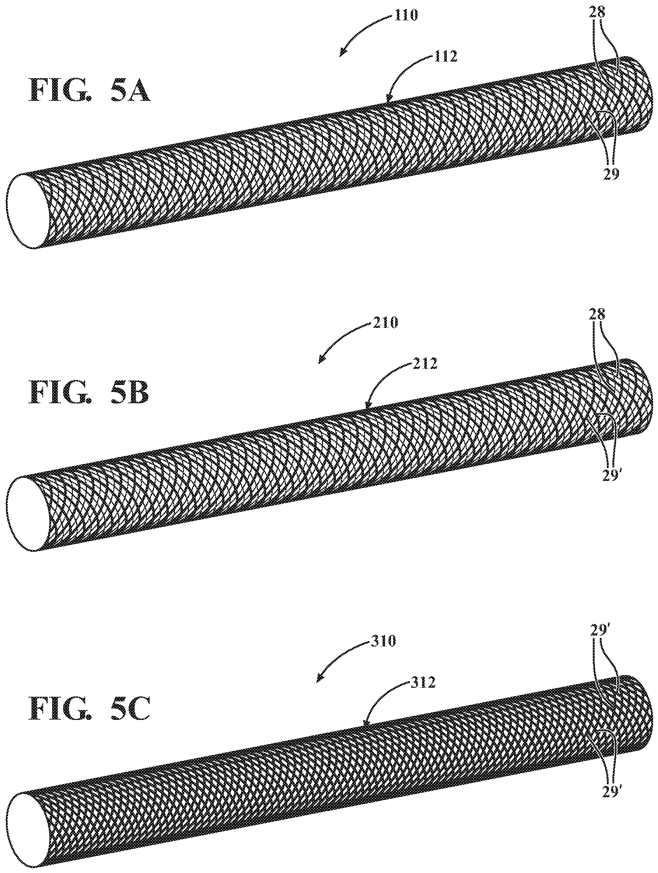

The wall 14 can be constructed having any suitable length and inner diameter. With the wall 12 providing multiple facets of increased protection, including abrasion resistance, thermal protection, impact resistance, noise absorption, as well as enhanced flexibility, the sleeve 10 is made cost effective given its ability to provide full protection to the elongate member 26 by itself without need additional wall layers or a secondary coating materials beyond that provided by the single layer wall 12. The wall 12 can be braided entirely from the plastically deformable and/or heat-settable monofilaments 28 (Figure 4A), or a wall 112 of a sleeve 110 constructed in accordance with another embodiment of the disclosure can be braided with plastically deformable and/or heat-settable monofilaments 28 and further include at least some plastically deformable and/or heat-settable multifilaments 29 (Figure 5A, shown prior to be formed into a convolute configuration), or a wall 212 of a sleeve 210 constructed in accordance with another embodiment of the disclosure can be braided with plastically deformable and/or heat-settable monofilaments 28 and further include at least some non-plastically deformable and/or non-heat-settable multifilaments 29' (Figure 5B, shown prior to be formed into a convolute configuration), if desired, to provide enhanced coverage and dampening (impermeability to contamination and dampening of noise and vibration) to the wall 12, or the wall 12 can be braided entirely from the plastically deformable and/or heat-settable multifilaments 29 (Figure 5C, shown prior to be formed into a convolute configuration). If non-plastically deformable and/or non-heat-settable multifilaments 29' are incorporated, it is to be recognized that sufficient bias is provided by the plastically deformable and/or heat-settable monofilaments 28 and/or plastically deformable and/or heat-settable multifilaments 29 to form the convolute shape including crests C and valleys V.

In construction, regardless of the type(s) of filaments used, as discussed above, as shown in Figure 4A, the wall 12 is braided initially as a straight cylindrical, non-convolute wall 12 (also applies to walls 112, 212, 312) with plastically deformable and/or heat-settable monofilaments 28 and/or plastically deformable and/or heat-settable multifilaments 29, and can further include non-plastically deformable and/or non-heat-settable multifilaments 29', as discussed above. The inner diameter of the wall 12 as initially braided can approximate the inner diameter of the desired finish sleeve 10 (Figure 4C). Upon braiding the wall 12, the wall 12 is disposed on a mandrel 30 (Figure 4B) and compressed axially along the direction of arrows A (it is to be recognized that one end of the wall 12 can remain fixed while the opposite end is compressed, or both ends can be compress toward one another) to produce radially outwardly extending crests C and radially inwardly extending valleys V. The wall 12 can be compressed axially along the longitudinal axis 20 to reduce the initial as braided length of the wall 12 to between about 1/4 - 1/10 its original length, or greater. The inner diameter of the valleys V can approximate that of the inner diameter of the initially braided wall 12 (Figure 4A). As a result of compressing the wall 12, as shown in Figure 4B, the wall 12 takes on an accordion-like configuration. As such, the entirety of the wall 12 does not simply expand in diameter to maintain a cylindrically straight and smooth inner and outer surface as would occur if crests and valleys were not formed, but rather, the wall 12 is formed having expanded diameter regions in the form of the crests C and reduced diameter regions in the form of the valleys V, thereby taking on a convolute configuration. As shown in Figure 4C, upon compressing the sleeve wall 12 axially to form the convolute shape, the wall 12 is either plastically deformed to retain the convolute shaped and/or it is subjected to a suitable heat source, such as a radiant heat source H, to cause the heat-settable yarns 28 to take on a resilient heat-set. Upon plastically deforming and/or heat-setting the yarns 28, the wall 12 is maintained in the resilient convolute configuration via plastic deformation of the yarns, whether monofilament 28 and/or multifilament 29, and/or via a heat-seat bias of the yarns, whether monofilament 28 and/or multifilament 29, and thus, the wall 12 remains, in resilient fashion, in the accordion-like, convolute configuration (Figures 1 and 2). It is to be recognized that in application, if desired, the wall 12 can be stretched axially against the bias exerted by the wall 12 and then fixed in place about the elongate member 26 to be protected, via any suitable supplemental fastener, including tape, tie-wraps, and the like, and thus, the length of the sleeve 10 is adjustable to accommodate elongate members of different length. It is to be further recognized that the process illustrated in Figures 4A-4C applies to the sleeves 110, 210, 310 illustrated in Figures 5A-5C, though the sleeves 110, 210, 310 are illustrated prior to be formed into their convolute configurations.

Obviously, many modifications and variations of the present invention are possible in light of the above teachings. It is contemplated that all features of all claims and of all embodiments can be combined with each other, so long as such combinations would not contradict one another. It is, therefore, to be understood that within the scope of the appended claims, the invention may be practiced otherwise than as specifically described.

## Claims

1. A convolute protective textile sleeve, comprising:
a flexible, tubular wall of braided yarns, at least some of the yarns being provided as plastically deformable and/or heat-settable monofilaments that are plastically deformed and/or heat-set upon being braided to provide the wall with a permanent, accordion-like, convolute shape, the convolute shape being formed by a plurality of alternating crests and valleys, wherein the crests are formed in tight, axially compressed relation with one another, with the valleys intervening between the crests being relatively narrow or short in axially extending length relative to the crests and with a gap between adjacent convolutes which is no greater than ¼ the axial width of a single convolute.

2. The convolute protective sleeve of claim 1, wherein the wall is formed entirely of plastically deformed and/or heat-set monofilaments.

3. The convolute protective sleeve of claim 1, wherein the wall includes multifilaments.

4. The convolute protective sleeve of claim 3, wherein at least some of the multifilaments are plastically deformed and/or heat-set.

5. The convolute protective sleeve of claim 3, wherein at least some of the multifilaments are neither plastically deformed nor heat-set.

6. The convolute protective sleeve of claim 5, wherein the wall includes heat-set monofilaments.

7. The convolute protective sleeve of claim 6, wherein the wall is entirely formed of heat-set monofilaments and multifilaments that are neither plastically deformable nor heat-settable.

8. The convolute protective sleeve of claim 5, wherein the wall is entirely formed of heat-set multifilaments and multifilaments that are neither plastically deformable nor heat-settable.

9. A method of constructing a convolute textile sleeve, comprising:
braiding a circumferentially continuous wall including plastically deformable and/or heat-settable yarns;
compressing the wall axially along a longitudinal axis of the wall and forming the wall having an accordion-like shape with alternating crests and valleys; and
plastically deforming and/or heat-setting the wall while in the axially compressed state such that the heat-set yarns maintain the wall in the accordion-like configuration with a gap between adjacent convolutes which is no greater than ¼ the axial width of a single convolute.

10. The method of claim 9, further including braiding the wall entirely of plastically deformable and/or heat-settable monofilaments.

11. The method of claim 9, further including braiding the wall including multifilaments.

12. The method of claim 11, further including plastically deforming and/or heat-setting at least some of the multifilaments.

13. The method of claim 12, further including providing at least some of the multifilaments as being neither plastically deformable nor heat-settable.

14. The method of claim 13, further including braiding the wall entirely of heat-settable monofilaments and multifilaments that are neither plastically deformable nor heat-settable.

15. The method of claim 9, further including heat-setting or plastically deforming the wall so that the crests are tightly packed immediately adjacent one another with the intervening valleys having a relatively short axially extending length relative to the length of the individual crests, thereby providing the wall with a significantly increased linear density relative to the wall as initially braided and prior to being heat-set or plastically deformed.

## Patentansprüche

1. Gewickelte Schutztextilhülle, umfassend:
eine flexible, röhrenförmige Wand aus geflochtenen Garnen, wobei mindestens einige der Garne als plastisch verformbare und/oder thermofixierbare Monofilamente bereitgestellt sind, die beim Flechten plastisch verformt und/oder thermofixiert werden, um der Wand eine dauerhafte, ziehharmonikaartige, gewickelte Gestalt zu verleihen, wobei die gewickelte Gestalt durch eine Vielzahl von abwechselnden Kämmen und Tälern ausgebildet ist, wobei die Kämme in enger, axial zusammengedrückter Beziehung zueinander ausgebildet sind, wobei die zwischen den Kämmen liegenden Täler relativ schmal oder kurz in sich axial erstreckender Länge im Verhältnis zu den Kämmen sind, und einen Spalt zwischen benachbarten Wicklungen aufweisen, der nicht größer als ¼ der axialen Breite einer einzelnen Wicklung ist.

2. Gewickelte Schutzhülle nach Anspruch 1, wobei die Wand gänzlich aus plastisch verformten und/oder thermofixierten Monofilamenten ausgebildet ist.

3. Gewickelte Schutzhülle nach Anspruch 1, wobei die Wand Multifilamente beinhaltet.

4. Gewickelte Schutzhülle nach Anspruch 3, wobei mindestens einige der Multifilamente plastisch verformt und/oder thermofixiert sind.

5. Gewickelte Schutzhülle nach Anspruch 3, wobei mindestens einige der Multifilamente weder plastisch verformt noch thermofixiert sind.

6. Gewickelte Schutzhülle nach Anspruch 5, wobei die Wand thermofixierte Monofilamente beinhaltet.

7. Gewickelte Schutzhülle nach Anspruch 6, wobei die Wand gänzlich aus thermofixierten Monofilamenten und Multifilamenten, die weder plastisch verformbar noch thermofixierbar sind, ausgebildet ist.

8. Gewickelte Schutzhülle nach Anspruch 5, wobei die Wand gänzlich aus thermofixierten Multifilamenten und Multifilamenten, die weder plastisch verformbar noch thermofixierbar sind, ausgebildet ist.

9. Verfahren zum Konstruieren einer gewickelten Textilhülle, umfassend:
Flechten einer in Umfangsrichtung durchgehenden Wand, die plastisch verformbare und/oder thermofixierbare Garne beinhaltet;
Zusammendrücken der Wand axial entlang einer Längsachse der Wand und Ausbilden der Wand mit einer ziehharmonikaartigen Gestalt mit abwechselnden Kämmen und Tälern; und
plastisches Verformen und/oder Thermofixieren der Wand im axial zusammengedrückten Zustand derart, dass die thermofixierten Garne die Wand in der ziehharmonikaartigen Konfiguration mit einem Spalt zwischen benachbarten Windungen halten, der nicht größer als ¼ der axialen Breite einer einzelnen Wicklung ist.

10. Verfahren nach Anspruch 9, ferner beinhaltend Flechten der Wand gänzlich aus plastisch verformbaren und/oder thermofixierbaren Monofilamenten.

11. Verfahren nach Anspruch 9, ferner beinhaltend Flechten der Wand, die Multifilamente beinhaltet.

12. Verfahren nach Anspruch 11, ferner beinhaltend plastisches Verformen und/oder Thermofixieren von mindestens einigen der Multifilamente.

13. Verfahren nach Anspruch 12, ferner beinhaltend Bereitstellen mindestens einiger der Multifilamente als weder plastisch verformbar noch thermofixierbar.

14. Verfahren nach Anspruch 13, ferner beinhaltend Flechten der Wand gänzlich aus thermofixierbaren Monofilamenten und Multifilamenten, die weder plastisch verformbar noch thermofixierbar sind.

15. Verfahren nach Anspruch 9, ferner beinhaltend Thermofixieren oder plastisches Verformen der Wand, sodass die Kämme unmittelbar benachbart zueinander eng gepackt sind, wobei die dazwischenliegenden Täler eine relativ kurze sich axial erstreckende Länge im Verhältnis zu der Länge der einzelnen Kämme aufweisen, wodurch der Wand eine signifikant erhöhte lineare Dichte im Verhältnis zu der Wand, wie ursprünglich geflochten, und bevor sie thermofixiert oder plastisch verformt wird, verliehen wird.

## Revendications

1. Manchon textile protecteur sinueux, comprenant :
une paroi tubulaire souple de fils tressés, au moins une partie des fils étant fournie sous forme de monofilaments plastiquement déformables et/ou thermodurcissables qui sont déformés plastiquement et/ou thermodurcis lors de leur tressage pour conférer à la paroi une forme sinueuse permanente en accordéon, la forme sinueuse étant formée par une pluralité de crêtes et de creux alternés, lesdites crêtes étant formées en relation serrée et axialement comprimée les unes avec les autres, les creux qui interviennent entre les crêtes étant relativement étroits ou courts par leur longueur s'étendant axialement par rapport aux crêtes et avec un espace entre les spires adjacentes qui n'est pas supérieur à ¼ de la largeur axiale d'une seule spire.

2. Manchon protecteur sinueux selon la revendication 1, ladite paroi étant formée entièrement de monofilaments déformés plastiquement et/ou thermodurcis.

3. Manchon protecteur sinueux selon la revendication 1, ladite paroi comprenant des multifilaments.

4. Manchon protecteur sinueux selon la revendication 3, au moins une partie des multifilaments étant déformée plastiquement et/ou thermodurcie.

5. Manchon protecteur sinueux selon la revendication 3, au moins une partie des multifilaments n'étant ni déformée plastiquement ni thermodurcie.

6. Manchon protecteur sinueux selon la revendication 5, ladite paroi comprenant des monofilaments thermodurcis.

7. Manchon protecteur sinueux selon la revendication 6, ladite paroi étant entièrement formée de monofilaments et de multifilaments thermodurcis qui ne sont ni plastiquement déformables ni thermodurcissables.

8. Manchon protecteur sinueux selon la revendication 5, ladite paroi étant entièrement formée de multifilaments thermodurcis et de multifilaments qui ne sont ni plastiquement déformables ni thermodurcissables.

9. Procédé de construction d'un manchon textile sinueux comprenant :
le tressage d'une paroi circonférentiellement continue comprenant des fils plastiquement déformables et/ou thermodurcissables ;
la compression axiale de la paroi le long d'un axe longitudinal de la paroi et la formation de la paroi qui présente une forme en accordéon dotée de crêtes et de creux alternés ; et
la déformation plastique et/ou le thermodurcissement de la paroi alors qu'elle se trouve dans l'état axialement comprimé de sorte que les fils thermodurcis maintiennent la paroi dans la configuration en accordéon avec un espace entre les spires adjacentes qui n'est pas supérieur à ¼ de la largeur axiale d'une seule spire.

10. Procédé selon la revendication 9, comprenant en outre le tressage de la paroi entièrement en monofilaments plastiquement déformables et/ou thermodurcissables.

11. Procédé selon la revendication 9, comprenant en outre le tressage de la paroi comprenant des multifilaments.

12. Procédé selon la revendication 11, comprenant en outre la déformation plastique et/ou le thermodurcissement d'au moins une partie des multifilaments.

13. Procédé selon la revendication 12, comprenant en outre la fourniture d'au moins une partie des multifilaments comme n'étant ni plastiquement déformables ni thermodurcissables.

14. Procédé selon la revendication 13, comprenant en outre le tressage de la paroi entièrement en monofilaments et multifilaments thermodurcissables qui ne sont ni plastiquement déformables ni thermodurcissables.

15. Procédé selon la revendication 9, comprenant en outre le thermodurcissement ou la déformation plastique de la paroi de sorte que les crêtes soient étroitement tassées immédiatement adjacentes les unes aux autres, les creux intermédiaires présentant une longueur s'étendant axialement relativement courte par rapport à la longueur des crêtes individuelles, ce qui permet de conférer à la paroi une densité linéaire considérablement accrue par rapport à la paroi telle qu'initialement tressée et avant d'être thermodurcie ou déformée plastiquement.
